# EUROPEAN PATENT SPECIFICATION

(11) **EP 0 960 320 B1**
(45) Date of publication and mention of the grant of the patent: **20.06.2007**
(21) Application number: 97942319.1
(22) Date of filing: 26.09.1997
(51) Int. Cl.: G01F 11/04, G01F 11/02

(54) **LIQUID DISPENSING DEVICE**
VORRICHTUNG ZUR ABGABE EINER FLÜSSIGKEIT
DISPOSITIF DISTRIBUTEUR DE LIQUIDE

(30) Priority: 13.02.1997 ZA 9701207
(43) Date of publication of application: 01.12.1999
(73) Proprietor: Technology Finance Corporation (Proprietary) Limited, Sandton 2199 (ZA)
(72) Inventor: Technology Finance Corporation (Proprietary) Limited, Sandton 2199 (ZA)
(74) Representative: Townsend, Victoria Jayne
(86) International application number: PCT/NZ1997/000120
(87) International publication number: WO 1998/036248

(56) References cited:
- AU-A- 5 263 790
- CH-A5- 627 552
- DE-A1- 4 218 721
- FR-A- 2 390 712
- US-A- 5 354 285

## Description

### FIELD OF THE INVENTION

This invention relates to a liquid dispensing device and in particular a device for dispensing controlled micro-volumes of liquid. The device finds particular application in the field of gas chromatography.

### BACKGROUND OF THE INVENTION

Gas chromatography requires the preparation of controlled gas-vapour mixtures for the purpose of calibration and analysis. This procedure involves the introduction of a precise volume of liquid into a chamber containing a carrier gas of known properties, the liquid being instantly vaporised to form a gas-vapour mixture. Typically this procedure is carried out by manual injection using micro-syringes. There are obvious disadvantages to this procedure in that it requires a practised hand to fill the syringe with a bubble-free sample and then inject repetitively so that consistent results are achieved. Both the calibration standard and the sample must be injected several times to ensure accurate results.

A syringe using a stepper motor is known from DE4 218 721.

In a syringe like, for example, in document US 5 354 285, there must be perfect sealing between the plunger or piston and the barrel along its entire length. This becomes a problem particularly, in micro syringes where the plunger is a very thin rod that can bend or deform easily after short usage.

The same criteria for standard and sample delivery into the chamber apply to high performance liquid chromatography. In some ways the procedure is more arduous in that samples must be degassed and more care is required because of large sample volumes and larger syringes.

It is therefor an object of this invention to provide a liquid dispensing device which overcomes or at least minimizes these problems and provides repeatable delivery of a gas free sample.

### THE INVENTION

According to the invention, a liquid dispensing device comprises a cylinder having an open end and including a piston slidable therein, the piston including a coaxial rod slidable within itself; and displacement means adapted to effect selective linear displacement of the piston in the cylinder and /or the rod within the piston in order to vary the volume of the cylinder.

The rod protrudes a predetermined distance into the cylinder body and the point of exit of the protrusion from the piston is sealed, by means of an O-ring. Unlike in a syringe, this sealing is at a single point and a mechanism is used to tighten the 0-ring around the rod at the seal.

The upper end of the interior of the cylinder is dome shaped.

The displacement means includes a reversible stepper motor and a clutch mechanism is provided to facilitate vertical movement of the piston and rod together when it is engaged. Disengagement of the clutch permits movement of the rod only.

In a typical chromatographical situation the top end of the cylinder is in communication with the liquid sample to be injected by means of a micro-capillary, via a rotary valve. In operation, the clutch is engaged and the piston is moved down the cylinder to draw sample into the cylinder body. The valve is then rotated and upward movement of the piston expels the uppermost portion of the liquid together with any air bubbles to waste. This step may be repeated once or twice. The domed shape of the cylinder ensures that no air bubbles remain in the cylinder, valve or in the capillary tube. The device is now set for discharge of the sample into the chromatograph chamber. The valve is reorientated and the clutch is disengaged. The stepper motor advances the rod upwards through the stationary piston to displace a volume of liquid from the filled cylinder, through the valve. The volume discharged is proportional to the volume of the portion of the rod inserted into the fixed pool of liquid contained in the cylinder.

The precise volume discharged can be calculated using the rod movement. This is obtained by counting the stepper motor steps or alternatively, by means of a micrometer attached to the motor shaft, and from the pitch of the threads on the drive shaft and the exact diameter of the rod which are known.

In the preferred form of the invention the displacement means includes a nut coaxial with the piston and rod, the nut being rotatable on an externally threaded portion of the piston and being in disengageable communication with a stepper motor adapted to effect linear displacement of the piston. The displacement means may further include a second nut coaxial with the piston and rod, the rod including a plate member at the base thereof for attachment to the nut and, the nut being in further permanent rotatable communication with the stepper motor by means of a threaded shaft. This second nut is adapted to facilitate linear displacement of the rod within the piston.

Whereas the second nut is in permanent communication with the stepper motor, a clutch mechanism is provided to engage or disengage the first nut from the motor. This arrangement ensures that the motor will always cause rotation of the threaded motor shaft. If the clutch is engaged the first nut will be rotated causing simultaneous sliding of the piston and rod. If the clutch is disengaged, the rod will slide within the piston which will remain stationary.

In the preferred form of the invention the clutch is electromechanical with one or more solenoid coils being provided having retractable locking pins adapted to engage complemental slots when the solenoid is energised to engage the clutch. An alternative clutch arrangement involves a single fixed solenoid coil which can attract or repel magnetised locking pins.

The volumes required to be discharged for gas chromatographic purposes are minute and it is desired that the injection samples having volumes of the order of pico litres may be dischargeable by the device of the invention.

In one form, a stepper motor capable of rotation in two hundred steps per revolution is provided and this together with a thread pitch of 1mm on the piston and 0.5 mm on the rod results in linear advancement of the piston by 0.005 mm and the rod 0.0025 mm per motor step. Alternatively, the two threaded pitches may be the same.

The device may be provided with a housing which is adapted to support the displacement means relative to the motor.

### EMBODIMENT OF THE INVENTION

An embodiment of the invention is described below with reference to the accompanying drawings in which:
Figure I is a sectional view through a device according to the invention; and

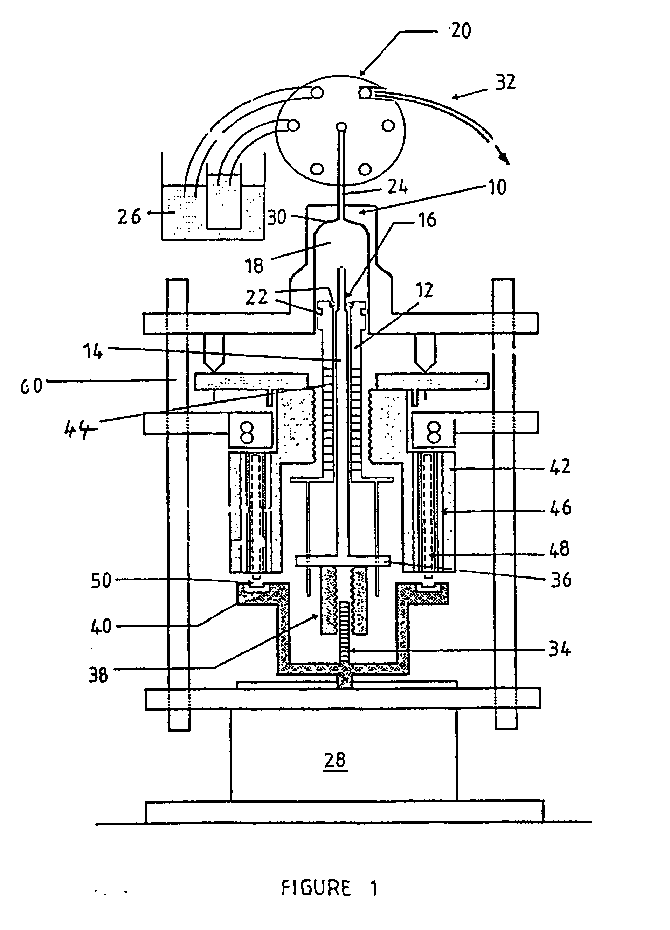

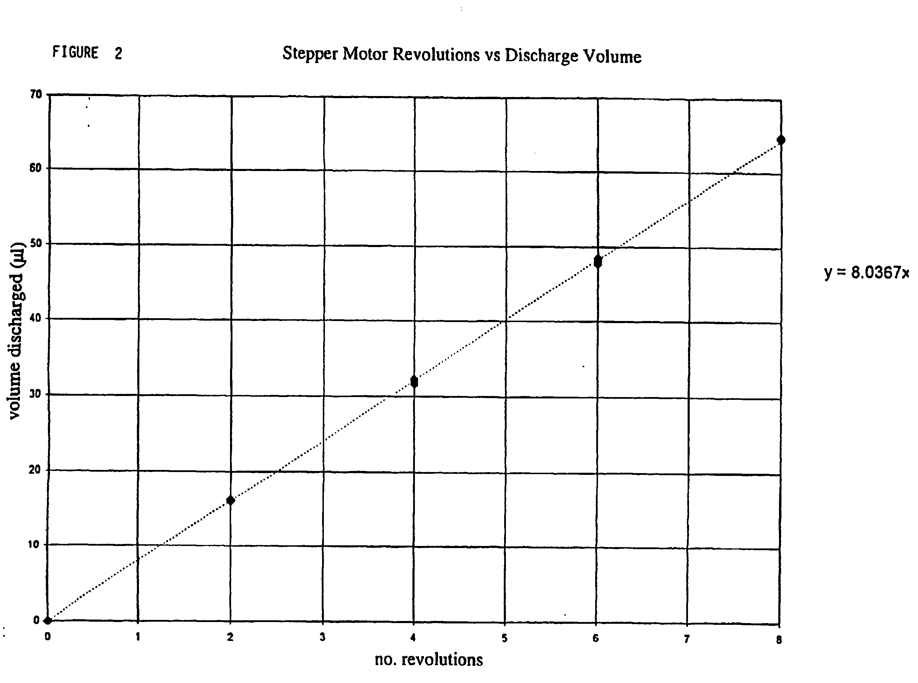

Figure 2 is a graph relating to the very accurate data obtained with the device, in which the measured volume of liquid discharged is exactly proportional to the stepper motor revolutions...

In the drawing, a liquid dispensing device comprises a cylinder 10 having a piston 12 slidable therein. The piston has a coaxial rod 14 slidable within itself. The rod has a protrusion 16 and may be advanced into the body 18 of the cylinder either on its own, or in conjunction with the piston to effect discharge of liquid from 18 into a gas chromatograph for analysis via rotary port valve 20. O-rings 22 are provided to seal the cylinder.

In operation, the valve 20 is rotated to permit liquid sample to be drawn through the valve into the body of the cylinder 18 via micro capillaries in 24. This is effected by engaging the clutch mechanism and moving the piston and rod together downwards.
The valve is then reorientated to expel to the waste container 26, and the direction of the stepper motor 28 is reversed. With the clutch still engaged the piston and rod move upwards together to expel the uppermost portion of the liquid to waste along with any air bubbles which may be present. The domed roof 30 of the cylinder prevents bubbles from collecting and remaining in the cylinder, valve or micro-capillay.

The rotary valve is then re-orientated and set for discharge or injection into the gas chromatograph or other desired volume. The clutch is disengaged so that the stepper motor causes advancement of the rod only along the piston shaft to displace a predetermined volume of liquid from the cylinder body 18. into the gas chromatograph via micro-capillary 32.

The stepper motor 28 effects movement of the piston and rod by rotating threaded shaft 34. The bottom end of the rod 14 includes a plate 36 to which is fixed a nut 38 (the second coaxial nut described above). This nut rotates on the threaded shaft 34 and results in upward or downward sliding of the rod.

The threaded shaft includes a formation 40 adapted to engage a further nut 42 (the first coaxial nut) which is rotatable on an externally threaded portion 44 of the piston. An electromagnetic clutch facilitates engagement of this formation and when the clutch is engaged, the stepper motor effects movement of the piston and rod in tandem. When disengaged, only the rod moves as described above.

The clutch is of an electromagnetic nature and comprises one or more solenoid coils 46 with the walls of the nut 42 and retractable locking pins 48. Energising the coil causes the pin to engage or disengage the slots 50 cut in formation 40.

Housing 60 supports the piston and rod in position relative to the stepper motor.

## Claims

1. A liquid dispensing device for micro-volumes of liquid comprising a cylinder (10) whose upper end is domed, the cylinder having an open end and including a piston (12) slidable therein, the piston being adapted to be moved by means of a reversible stepper motor (28) alternatively to draw liquid into the cylinder and to expel a portion of the liquid which contains air bubbles; the piston including a coaxial rod (14) of small diameter protruding through the piston into the cylinder, the rod being sealingly slidable through an O-ring (22) at the point of protrusion into the piston; **characterized in that** the stepper motor includes a clutch permitting the piston and rod to be moved together and, when declutched to move the rod only in very small distances corresponding to the displacement of pico litre quantities of liquid, such small volumes of liquid being displaced as a sample into a receiving chamber.

2. The liquid dispensing device according to claim 1 in which a first nut (42) is provided coaxial with the piston and the rod, the nut being rotatable on an externally threaded portion of the piston and being in disengageable communication with the stepper motor for linear displacement of the piston and rod; and a second nut (38) coaxial with the piston and rod, the rod including a plate member (36) at the base thereof for attachment to the nut and the nut being in further permanent rotatable communication with the stepper motor by means of a threaded shaft even when the clutch is disengaged.

## Patentansprüche

1. Flüssigkeits-Abgabevorrichtung für Flüssigkeits-Mikro-Volumina, mit einem Zylinder (10), dessen oberes Ende domförmig ist, wobei der Zylinder ein offenes Ende aufweist und einen darin verschiebbaren Kolben (12) einschließt, wobei der Kolben zur Bewegung mit Hilfe eines in seiner Bewegungsrichtung umkehrbaren Schrittmotors (28) ausgebildet ist, um abwechselnd Flüssigkeit in den Zylinder anzusaugen und einen Teil der Flüssigkeit auszustoßen, die Luftblasen enthält; wobei der Kolben eine koaxiale Stange (14) mit einem kleinen Durchmesser aufweist, die durch den Kolben hindurch in den Zylinder vorspringt, wobei die Stange unter Abdichtung durch einen O-Ring (22) an dem Punkt des Vorspringens in den Kolben verschiebbar ist; **dadurch gekennzeichnet, dass** der Schrittmotor eine Kupplung einschließt, die es dem Kolben und der Stange ermöglicht, zusammen bewegt zu werden, und die im ausgekuppelten Zustand eine Bewegung lediglich der Stange über sehr kleine Strecken ermöglicht, die der Verdrängung von Pikoliter-Mengen der Flüssigkeit entsprechen, wobei diese kleinen Flüssigkeitsvolumina als eine Probe in eine Aufnahmekammer verdrängt werden.

2. Flüssigkeits-Abgabevorrichtung nach Anspruch 1, bei der eine erste Mutter (42) koaxial zu dem Kolben und der Stange angeordnet ist, wobei die Mutter auf einem mit Aussengewinde versehenen Teil des Kolbens drehbar ist und in lösbarer Verbindung mit dem Schrittmotor für eine lineare Verschiebung des Kolbens und der Stange steht; und bei der eine zweite Mutter (38) koaxial zu dem Kolben und der Kolbenstange angeordnet ist, wobei die Stange ein Plattenbauteil (36) an ihrer Basis zur Anbringung an der Mutter einschließt und die Mutter in dauernder drehbarer Verbindung mit dem Schrittmotor mit Hilfe einer Gewindewelle steht, selbst wenn die Kupplung ausgekuppelt ist.

## Revendications

1. Dispositif de distribution de liquide pour des microvolumes de liquide, comprenant un cylindre (10) dont l'extrémité supérieure est bombée, le cylindre possédant une extrémité ouverte et englobant un piston (12) apte à coulisser à l'intérieur dudit cylindre, le piston étant conçu pour être mis en mouvement au moyen d'un moteur réversible pas à pas (28) en alternance pour aspirer du liquide dans le cylindre et pour expulser une portion du liquide qui contient des bulles d'air, le piston englobant une tige coaxiale (14) possédant un petit diamètre qui fait saillie à travers le piston pour pénétrer dans le cylindre, la tige étant à même de coulisser en étanchéité à travers un joint torique (22) à l'endroit où elle fait saillie dans le piston, **caractérisé en ce que** le moteur pas à pas englobe un embrayage qui permet de déplacer le piston et la tige de manière conjointe et, à l'état désembrayé, de déplacer uniquement la tige sur de très petites distances correspondant au déplacement de quantités de liquides égales à des picolitres, de petits volumes de ce type étant déplacés à titre d'échantillon dans une chambre de réception.

2. Dispositif de distribution de liquide selon la revendication 1, dans lequel on prévoit un premier écrou (42) en position coaxiale avec le piston et la tige, l'écrou étant rotatif sur une portion du piston possédant un filet de vis externe et étant mis en communication amovible avec le moteur pas à pas pour le déplacement linéaire du piston et de la tige, et un deuxième écrou (38) en position coaxiale avec le piston et la tige, la tige englobant un membre en forme de plaque (36) à sa base à des fins de fixation à l'écrou et l'écrou étant mis en communication rotative permanente ultérieure avec le moteur pas à pas au moyen d'une tige filetée, même à l'état désembrayé.
